# EUROPÄISCHE PATENTSCHRIFT

(11) **EP 2 570 774 B1**
(45) Veröffentlichungstag und Bekanntmachung des Hinweises auf die Patenterteilung: **28.12.2016**
(21) Anmeldenummer: 12182227.4
(22) Anmeldetag: 29.08.2012
(51) Int. Cl.: G01D 4/00

(54) **Verfahren und System zur Zeitreferenzierung von Messwerten eines Verbrauchszählers**
Method and system for time referencing a consumption meter's measurement values
Procédé et système de référencement horaire de valeurs de mesure d'un compteur de consommation

(30) Priorität: 14.09.2011 DE 102011113140
(43) Veröffentlichungstag der Anmeldung: 20.03.2013
(73) Patentinhaber: Power Plus Communications AG, 68167 Mannheim (DE)
(72) Erfinder: Liotta, Giovanni, 68305 Mannheim (DE); Wagner, Janosch, 97486 Königsberg (DE); Mayer, Eugen, 68305 Mannheim (DE); Rindchen, Markus, 67574 Osthofen (DE)
(74) Vertreter: Patent- und Rechtsanwälte Ullrich & Naumann

(56) Entgegenhaltungen:
- DE-A1- 10 024 544
- US-A- 6 014 089
- US-A1- 2004 181 492
- US-A1- 2006 224 335

## Beschreibung

Die Erfindung betrifft ein Verfahren und ein System zur Zeitreferenzierung von Messwerten eines Verbrauchszählers.

Solche Verfahren und Systeme sind beispielsweise aus US204/0181492, US2006/0224335 oder DE10024544 bekannt.

Bei der Versorgung von Verbrauchern mit elektrischer Energie wird von Energieversorgern - oft durch Regulierungsbehörden oder den Gesetzgeber - gefordert, lastund zeitvariable Tarife anzubieten. Ziel dieser Forderung ist die gezielte Steuerung des Verbrauchs durch entsprechende Tarife, um ein Stromnetz sinnvoll ausbalancieren zu können. Die Tarife müssen sich an der aktuellen Netzsituation orientieren, die durch zunehmende Integration von regenerativen und dezentralen Erzeugern an Regelmäßigkeit und Planbarkeit verloren hat. Während sich früher die Erzeugung am Verbrauch orientierte, wird mittlerweile eine gegenseitige Abstimmung von Erzeugung und Verbrauch immer wichtiger.

Zum Abbilden von zeitvariablen Tarifen ist eine regelmäßige Messung des aktuellen Verbrauchs mit zeitbezogener Auswertbarkeit notwendig. Hierzu sind in der Praxis prinzipiell zwei Verfahren bekannt:
- Der elektronische Zähler wird mit einer Uhr ausgestattet und die gemessenen Verbrauchswerte werden zusammen mit einem Zeitstempel im Zähler abgespeichert.
- Der elektronische Zähler ist mit mehreren Tarifregistern ausgestattet, in die - gesteuert durch Rundsteuersignale - die gemessenen Verbrauchswerte geschrieben werden.

Die Verwendung einer Uhr in jedem Zähler ergibt eine Lösung, die flexibel unterschiedliche Tarifierungen abdecken kann. Die mit Zeitstempel versehenen Messwerte können flexibel nach verschiedenen Gesichtspunkten ausgewertet werden. Allerdings ergibt sich dabei eine Reihe von Problemen. So ist in einen Großteil der derzeit installierten elektronischen Zähler keine Uhr integriert, was unter anderem auf den deutlich höheren Preis dieser Zähler gegenüber herkömmlichen Zählern zurückzuführen ist. Dies bedingt einen kostenintensiven Austausch der Zähler.

Ein anderes Problem ergibt sich durch die Notwendigkeit einer regelmäßigen Synchronisation der Zähleruhr. Da jede Uhr einer gewissen Ungenauigkeit unterliegt, muss die Zähleruhr in regelmäßigen Abständen mit einem Zeitnormal synchronisiert werden. Sonst würde die Zähleruhr nach einigen Jahren deutlich von der Atomuhr (und somit der Menge aller in Zählern verbauten Uhren) abweichen. Das Lastenheft EDL (Energiedienstleistung) des VDE FNN (Verband der Elektrotechnik Informationstechnik e.V. - Forum Netztechnik/Netzbetrieb) schreibt beispielsweise vor, dass eine Genauigkeit von ± 27 Sekunden eingehalten werden muss.

Zum Einhalten dieser Vorgabe ließe sich die Zähleruhr über einen Zeitsignalsender (beispielsweise dem funkbasierten DCF77) synchronisieren. Allerdings besteht die Schwierigkeit, dass der Empfang von funkbasierten Zeitsignalen in Kellern, in denen die Zähler üblicherweise installiert sind, eingeschränkt ist. Eine andere Möglichkeit bestünde in einer Synchronisation der Uhr über die Kommunikationsprotokolle, die zum Auslesen der Zählerstände genutzt werden. Allerdings unterstützen die derzeit eingesetzten Protokolle eine Zeitsynchronisation nur sehr eingeschränkt, so dass eine Erweiterung eines Protokolls notwendig wäre. Dadurch entstünde jedoch ein proprietäres System, in dem nur spezielle Zähler eingesetzt werden können, was wiederum die Kosten der Zähler erhöht.

Bei einer Realisierung des elektronischen Zählers mit unterschiedlichen Tarifregistern wird der Zugriff auf die Tarifregister mittels Rundsteuertechnik geschaltet, die vom Versorgungsunternehmen über die Stromleitungen an den Zähler übertragen werden. Allerdings ist die Anzahl der Tarifstufen durch die begrenzten Ressourcen im Zähler stark limitiert. Durch die Unidirektionalität und Primitivität des Verfahrens kann weder vom Zähler noch von der Rundsteuertechnik eine Rückmeldung über Erfolg oder Misserfolg eines Schaltvorgangs gesendet werden. Dadurch sind die Verbrauchswerte mit einer gewissen Unsicherheit behaftet. Zudem muss der Zähler Teile der Tarifstruktur abbilden, wodurch es praktisch unmöglich ist, variable Tarife flexibel anzubieten. Zudem erhöht sich der Preis des Zählers auch bei diesem Ansatz deutlich.

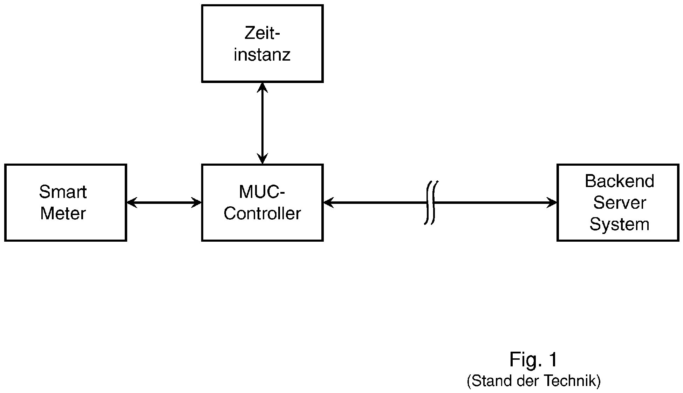

Im Zuge des verstärkten Fokus auf Smart Metering wird an verschiedenen anderen Lösungen gearbeitet, die eine intelligente Zeitsynchronisation bieten sollen. So wird beispielsweise mit SML (Smart Message Language) an einer Datenschnittstelle gearbeitet, die eine Zeitsynchronisation vom einem MUC (Multi Utility Communication)-Controller zum Zähler hin abbilden kann. Der MUC-Controller ist an eine Weit-bereichsschnittstelle (GPRS, DSL o.ä.) angebunden und synchronisiert die Uhrzeit über das NTP (Network Time Protocol). Der MUC-Controller bildet also eine Kommunikationseinheit für den intelligenten Zähler, der mittels einer weiteren Schnittstelle an diesen angebunden ist (beispielsweise M-Bus, Wireless M-Bus, RS232). Im Prinzip verbessert diese Entwicklung die Synchronisation der Zähleruhr über Zeitsignale, ist aber generell vom Verfahren her identisch. Fig. 1 zeigt schematisch diese Vorgehensweise bei der Zeitsynchronisation.

Ebenfalls wird im Zuge der Smart Meter Entwicklung mehr Speicher und mehr Intelligenz in die Zähler integriert, wodurch diese in der Lage sind, mehrere Tarifregister abzubilden, und nicht mehr auf Tag- und Nachtstrom beschränkt sind. Die Schaltung kann daneben nicht mehr ausschließlich durch Rundsteuertechnik erfolgen, sondern ebenfalls durch den Einsatz von Kommunikationsanbindungen, die zum Auslesen der Smart Meter bereitgestellt wird. Im Ergebnis wird dabei aber lediglich eine geringfügige Optimierung erreicht, ohne die grundlegende Herangehensweise zu ändern. Die bisherigen Hürden, Kosten und Komplexität bleiben bestehen.

Der vorliegenden Erfindung liegt daher die Aufgabe zugrunde, ein Verfahren und ein System der eingangs genannten Art derart auszugestalten und weiterzubilden, dass Messwerte eines Verbrauchszählers flexibel und kostengünstig mit Zeitreferenzen versehen werden können.

Erfindungsgemäß wird die voranstehende Aufgabe durch die Merkmale des Anspruchs 1 gelöst.

In systemmäßiger Hinsicht ist die voranstehende Aufgabe durch die Merkmale des nebengeordneten Anspruchs 10 gelöst.

In erfindungsgemäßer Weise ist zunächst erkannt worden, dass auf die Erhöhung der Intelligenz bei den Zählern verzichtet werden kann. Es ist nicht einmal notwendig, eine Zeitinstanz bei dem Verbrauchszähler bereitzustellen. Erfindungsgemäß ist nämlich erkannt worden, dass die Messwerte nicht zwangsläufig unmittelbar bei dem Verbrauchszähler mit einem Zeitstempel versehen werden müssen. Vielmehr ist es möglich, die Zeitreferenzierung bei einem entfernt von dem Verbrauchszähler angeordneten Referenzierungsserver vorzunehmen. Dazu werden zunächst Messwerte aus dem Verbrauchszähler ausgelesen. Die Messwerte repräsentieren den durch den Verbrauchszähler gemessenen Verbrauch. Dabei können durch den Verbrauchszähler prinzipiell verschiedenste Verbräuche gemessen werden. So kann beispielsweise der Verbrauch von elektrischer Energie, (Erd-)Gas, Wärme oder Wasser gemessen werden.

In einem nächsten Schritt werden die Messwerte an einen Referenzierungsserver übertragen. Der Messwert ist dabei noch nicht mit einem Zeitstempel versehen. Die Übertragung der Messwerte erfolgt auf einem Kommunikationsweg zwischen dem Verbrauchszähler und dem Referenzierungsserver. Der Kommunikationsweg kann durch verschiedenste aus der Praxis bekannte Verfahren realisiert sein. Verbindungsorientierte Ansätze können ebenso verwendet werden wie paketorientierte Übertragungsverfahren. Insbesondere bei der Messung des Verbrauchs elektrischer Energie bietet sich die Verwendung von PLC (Powerline Communication) an, bei dem Daten breitbandig direkt über die Stromleitungen übertragen werden können. Die auf dem Kommunikationsweg übertragenen Messwerte werden durch den Referenzierungsserver empfangen und durch diesen mit einer Uhrzeit referenziert. Die Uhrzeit wird dem Referenzierungsserver von einer Zeitinstanz bereitgestellt. Als Referenzierungszeit wird der Zeitpunkt verwendet, an dem der Messwert bei dem Referenzierungsserver empfangen wurde. Erfindungsgemäß ist nämlich erkannt worden, dass die Vorgaben, die üblicherweise in entsprechenden Standards definiert sind, eingehalten werden können, wenn die Übertragungszeit auf dem Kommunikationsweg bekannt ist oder zumindest beschränkt werden kann, also sicher unterhalb einer maximalen Übertragungszeit liegt.

In den meisten Fällen werden die Messwerte sehr schnell vom Verbrauchszähler zu dem Referenzierungsserver übertragen werden. Bei verbindungsorientierten Übertragungsverfahren liegen die Verzögerungszeiten deutlich unter einer Sekunde, meist im Bereich von wenigen 10 Millisekunden. Bei paketorientierten Übertragungsverfahren kann es durch Verlust von Datenpaketen auf dem Kommunikationsweg zu längeren Verzögerungen kommen, da die verlorenen Datenpakete erneut gesendet werden müssen. Allerdings sind auch dort die Verzögerungszeiten beherrschbar. Auf jeden Fall kann durch gezielte Maßnahmen auf dem Kommunikationsweg die Zeit für die Übertragung der Messwerte von dem Verbrauchszähler zu dem Referenzierungsserver unterhalb einer festlegbaren Grenze gehalten werden.

Besonders vorteilhaft bei dem erfindungsgemäßen Verfahren und dem erfindungsgemäßen System ist, dass keine tiefgreifenden Veränderungen einer bestehenden Zählerinfrastruktur notwendig sind. Vielmehr kann der erfindungsgemäße Ansatz ohne umfangreiche Anpassungen auf eine Vielzahl von vorhandenen Infrastrukturen angewandt werden. Zwar verlieren die Messwerte bei dem erfindungsgemäßen Verfahren und dem erfindungsgemäßen System die deterministische Beziehung zu ihrem Zeitstempel, da die Übertragungszeit nicht zweifelsfrei vorhersagbar ist. Allerdings wird dies zugunsten eines deutlich vereinfachten Systemaufbaus in Kauf genommen. Meist ist es bei der Zeitreferenzierung von Messwerten von Verbrauchszählern nicht notwendig, den exakten Zeitpunkt einer Messung zu kennen.

Eine Maßnahme zur Begrenzung der maximalen Übertragungszeit auf dem Kommunikationsweg kann darin bestehen, dass die Timeouts in den Netzwerkknoten auf dem Kommunikationsweg fest vorgegeben und relativ niedrig gewählt werden. Ein Timeout bezeichnet die Zeit, die ein Netzwerkknoten nach dem Versenden eines Datenpakets an einen benachbarten Netzwerkknoten auf einer Antwort wartet. Kann die Antwort nicht innerhalb des Timeouts empfangen werden, wird auf einen Verlust des Datenpakets geschlossen und das Datenpaket wird erneut an den benachbarten Netzwerkknoten gesendet. Bei TCP/IP (Transmission Control Protocol/Internet Protocol)-basierten Systemen werden Timeouts üblicherweise basierend auf der aktuellen Netzbelastung dynamisch generiert. Dadurch verliert jedoch ein derartiges System - zumindest in gewissen Grenzen - die Möglichkeit, die maximale Übertragungszeit festzulegen. Dies kann jedoch durch Festlegung der Timeouts vermieden werden.

Ergänzend oder alternativ hierzu kann die Anzahl der Sendewiederholungen beschränkt werden. Wenn ein Netzwerkknoten auf den Verlust eines Datenpakets schließt, wird ein Datenpaket erneut versendet. Diese Sendewiederholung wird so lange durchgeführt, bis eine Antwort von dem benachbarten Netzwerkknoten empfangen wird oder eine maximale Anzahl von Sendewiederholungen erreicht ist. Bleibt eine Antwort aus, so wird die Übertragung als gescheitert angesehen. Durch Reduzierung der maximalen Anzahl von Sendewiederholungen kann damit die maximale Verzögerungszeit auf dem Übertragungsweg begrenzt werden.

Bei paketorientierten Übertragungssystemen hat zudem die Anzahl der auf dem Übertragungsweg genutzten Netzwerkknoten einen entscheidenden Einfluss auf die Übertragungszeit. Daher kann als weitere Maßnahme zur Beschränkung der maximalen Übertragungszeit auf dem Kommunikationsweg die Anzahl der Netzwerkknoten auf dem Kommunikationsweg beschränkt werden.

Die zur Steuerung der maximalen Übertragungszeit notwendigen Parameter lassen sich vorteilhafterweise über Quality-of-Service-Mechanismen einstellen. Die meisten paketorientierten Systeme, insbesondere TCP/IP-basierte Systeme, geben hierzu weitreichende Möglichkeiten. Auf diese Weise kann das erfindungsgemäße Verfahren äußerst flexibel in bestehende Infrastrukturen integriert werden.

Vorzugsweise werden die einzelnen Parameter derart gewählt, dass sich eine Verzögerungszeit von weniger als 60 Sekunden ergibt. In einer bevorzugten Ausgestaltung wird die maximale Verzögerungszeit kleiner oder gleich 30 Sekunden gewählt. In einer ganz besonders bevorzugten Ausgestaltung wird die maximale Verzögerungszeit kleiner oder gleich 20 Sekunden festgelegt. Die exakte Wahl der Verzögerungszeit hängt von dem jeweiligen Anwendungsbereich ab und ob eventuell per Standard, Verordnung oder Gesetz definierte Rahmenbedingungen, beispielsweise hinsichtlich der Genauigkeit der Zeitstempel, einzuhalten sind.

In der Praxis sind insbesondere paketorientierte Übertragungsverfahren sehr stark von der Belastung des Netzwerkes abhängig. Bei stark belasteten Netzwerkabschnitten nimmt die Verzögerungszeit stark zu, da es zu Paketkollisionen kommen kann und da Netzwerkknoten die für die Übertragung vorgesehenen Datenpakete länger bis zum Versenden über eine Netzwerkstrecke zwischenspeichern müssen. Daher kann das Einhalten der maximalen Übertragungszeit sporadisch oder auch regelmäßig überprüft. Hierzu kann der Referenzierungsserver (oder eine andere, vorzugsweise bei den Referenzierungsserver angeordnete Entität des Netzwerks) eine Anfrage an einen Verbrauchszähler senden, dessen Übertragungszeit über den Kommunikationsweg gemessen werden soll. Der Verbrauchszähler wird auf die Anfrage reagieren und eine Antwort an den Referenzierungsserver zurücksenden. Aus der Zeitdifferenz zwischen dem Versenden der Anfrage und dem Empfangen der Antwort kann der Referenzierungsserver schließen, wie lange ein Datenpaket auf dem Übertragungsweg übertragen wurde. Unter der Annahme, dass in beide Richtungen gleich schnell übertragen wurde, ergibt sich die aktuelle Übertragungszeit aus der Hälfte der gemessenen Zeitspanne. Liegt die gemessene Übertragungszeit unterhalb der maximalen Übertragungszeit, kann davon ausgegangen werden, dass der Kommunikationsweg die Vorgaben einhalten kann. Da die Messung bei einem paketorientierten Übertragungsverfahren jedoch nicht deterministisch ist, muss ein Nicht-Einhalten der maximalen Übertragungszeit nicht zwangläufig ein Verwerfen des Kommunikationsweges zur Folge haben.

Je nach Ausgestaltung des Kommunikationswegs zwischen Zähler und Referenzierungsserver kann auch eine andere Entität zur Überprüfung der Übertragungszeit genutzt werden. Hier sei beispielhaft auf ein Gateway verwiesen, der nach bei dem Zähler zwischen Zähler und Referenzierungsserver angeordnet sein kann.

In einer vereinfachten Ausführungsform kann die Messung der Übertragungszeit auch genutzt werden, ohne dass durch die zuvor beschriebenen Maßnahmen die maximale Übertragungszeit auf dem Kommunikationsweg festgesetzt wurde. Bei den Netzwerkinfrastrukturen, die zum Auslesen von Messwerten eines Verbrauchszählers gebräuchlich sind, ändert sich die Übertragungszeit auf dem Kommunikationsweg meist nicht sprungartig (abgesehen von Totalausfällen der Verbindung). Daher kann davon ausgegangen werden, dass sich die Übertragungszeit zwischen einer Messung der Übertragungszeit und einer Übertragung eines Messwertes nicht signifikant ändert. Daher kann das erfindungsgemäße Verfahren und das erfindungsgemäße System auch derart umgesetzt sein, dass der Referenzierungsserver (oder eine andere dafür vorgesehen Netzwerkentität) eine Anfrage an den Verbrauchszähler (oder einem vorgeschalteten Gateway oder dergleichen) sendet und die Zeit bis zum Empfang einer Antwort misst. Wenn aus der Zeit bis zum Empfang der Antwort geschlossen werden kann, dass die Übertragungszeit unterhalb einer definierbaren maximalen Übertragungszeit liegt, so kann ein Messwert des Verbrauchszählers angefragt und verwertet werden.

Bei einem pull-Betrieb des Verbrauchszählers (also dem aktiven Abrufen von Messwerten) kann auch die Zeit zwischen Senden der Anfrage und Empfang der Antwort gemessen und ausgewertet werden, ohne dass zuvor ein Testpaket genutzt wird. Auf diese Weise haben Veränderungen der Übertragungszeit keine Auswirkungen und es kann sicher die Übertragungszeit bestimmt werden. Auf diese Weise wäre prinzipiell auch denkbar, den Zeitstempel durch die gemessene Übertragungszeit zu korrigieren.

Zur Steigerung der Verlässlichkeit der bei dem Referenzierungsserver empfangenen Messwerte können Übertragungsversuche von Messwerten eines Verbrauchszählers dann abgebrochen werden, wenn deren Übertragung längere Zeit als die maximale Übertragungszeit in Anspruch genommen hat. Dies kann beispielsweise bei Überschreitung der maximalen Anzahl von Sendewiederholungen bei einem Netzwerkknoten auf dem Kommunikationsweg oder bei Überschreitung der maximalen Anzahl von auf dem Kommunikationsweg beteiligten Netzwerkknoten entstehen. Damit kann der empfangene Messwert die Vorgaben hinsichtlich der Genauigkeit des Zeitstempels nicht mehr erfüllen und die Übertragung des Messwerts kann abgebrochen werden. Zur Vermeidung einer größeren Lücke in den abgespeicherten Messwerten kann aktiv eine erneute Übertragung eines aktuellen Messwerts angefragt werden.

In einer besonders einfachen Ausgestaltung des Verfahrens kann das Referenzieren eines empfangenen Messwertes zu einer Uhrzeit dadurch erfolgen, dass neben dem empfangenen Messwert die Uhrzeit, zu der der Messwert empfangen worden ist, abgespeichert wird. Dadurch kann auf einfache Art und Weise eine Beziehung zwischen Messwert und Uhrzeit hergestellt und gespeichert werden.

In einer anderen Ausgestaltung kann zu einem empfangenen Messwert eine Signatur erzeugt werden, die von der Uhrzeit abhängt, an dem der Messwert empfangen worden ist. Signatur und Messwert werden dann gemeinsam abgespeichert. Auf diese Weise kann sichergestellt werden, dass es nicht zu einer nachträglichen Manipulation des Zeitstempels kommt. Wenn die Signatur zusätzlich von dem jeweiligen Messwert abhängt, kann auch dessen nachträgliche Manipulation effektiv ausgeschlossen werden.

Bei dem erfindungsgemäßen Verfahren ist der Referenzierungsserver vorzugsweise mit einer Vielzahl von Verbrauchszählern verbunden, wodurch für eine Vielzahl von Verbrauchszählern lediglich eine Zeitinstanz notwendig ist. Da diese Zeitinstanz bei dem Referenzierungsserver üblicherweise deutlich einfacher mit einem Zeitsignal synchronisiert werden kann, vereinfacht sich das System erheblich und die Kosten können deutlich reduziert werden. Sollten die Möglichkeiten des Empfangs eines Zeitsignals nicht bei dem Referenzierungsserver gegeben sein, so müssen bei dem erfindungsgemäßen System lediglich an einer Stelle besondere Maßnahmen ergriffen werden. Besondere Maßnahmen an jedem der Verbrauchszähler sind hingegen nicht notwendig.

Zur Zeitsynchronisation wird vorzugsweise ein Zeitserver verwendet, der mittels NTP (Network Time Protocol) ein Zeitsignal bereitstellt. Alternativ können auch andere Zeitsignale, beispielsweise ein funkbasiertes DCF77, verwendet werden.

Das Triggern einer Übertragung von Messwerten eines Verbrauchszählers zu dem Referenzierungsserver lässt sich auf verschiedene Art und Weise realisieren. So kann der Verbrauchszähler selbstständig Messwerte an den Referenzierungsserver übertragen. Das Übertragen kann durch verschiedene Ereignisse getriggert sein. So kann ein Übertragen periodisch nach Verstreichen einer definierbaren Zeitspanne ausgelöst werden. Allerdings ist auch denkbar, dass Messwerte immer dann versendet werden, wenn sich der Messwert um eine vorgebbare Differenz, beispielsweise 5 Kilowattstunden, geändert hat.

Zusätzlich oder alternativ können die Messwerte eines Verbrauchszählers durch den Referenzierungsserver von dem Verbrauchszähler abgefragt werden. Hierzu sind aus der Praxis verschiedenste Verfahren bekannt. Auch dies kann periodisch erfolgen. Zudem kann das Abfragen durch einen anstehenden Wechsel der Tarifstufe oder andere externe Ereignisse ausgelöst werden.

Vorzugsweise ist der Referenzierungsserver an einem zentralen Punkt angeordnet. Der zentrale Punkt ist dabei vorzugsweise innerhalb des Energieversorgungsnetzwerkes ausgebildet. Der Begriff "zentral" ist dabei flexibel zu verstehen. Zentral kann bedeuten, dass der Referenzierungsserver in einem Rechenzentrum eines Versorgungsunternehmens lokalisiert ist. Allerdings kann der Referenzierungsserver auch in einer Transformatorstation oder einem Anschlusspunkt für eine Vielzahl von Verbrauchern, beispielsweise im Keller eines Mehrfamilienhauses oder eines größeren Bürogebäudes, angeordnet sein. Wesentliche ist, dass die Zeitinstanz außerhalb des Zählers betrieben wird und vorzugsweise Messwerte von einer Vielzahl von Verbrauchszählern mit einem Zeitstempel versehen werden.

Zu einer weiteren Flexibilisierung des Systems auf dem Kommunikationsweg zwischen Verbrauchszähler und Referenzierungsserver ein Gateway angeordnet. Das Gateway verfügt vorzugsweise über eine Nahbereichsschnittstelle und eine Weitbereichsschnittstelle. Als Nahbereichsschnittstelle können beispielsweise M-Bus, Wireless M-Bus oder RS232 verwendet werden. Eine Weitbereichsschnittstelle kann durch GPRS (General Packet Radio Service), DSL (Digital Subscriber Line) oder PLC (Powerline Communication) gebildet sein. Im Betrieb führt das Gateway eine Schnittstellenwandlung zwischen der Nahbereichsschnittstelle und der Weitbereichsschnittstelle durch. Auf diese Weise können flexibel eine Vielzahl von verschiedenen Verbrauchszählern angekoppelt und verwendet werden.

Das Referenzieren der Messwerte, d.h. das Versehen der Messwerte mit einem Zeitstempel (der Referenzierungszeit), wird durch eine Referenzierungseinheit vorgenommen. In einer bevorzugten Ausgestaltung ist die Referenzierungseinheit Bestandteil des Referenzierungsservers. Es ist allerdings auch denkbar, dass die Referenzierungseinheit außerhalb des Referenzierungsservers implementiert ist und dass der Referenzierungsserver die für das Referenzieren notwendigen Daten an die Referenzierungseinheit sendet.

Vorzugsweise sind die an dem Kommunikationsweg beteiligten Entitäten zwischen Verbrauchszähler und Referenzierungsserver derart ausgestaltet, dass keine Zwischenspeicherung und/oder Weiterverarbeitung der empfangenen Daten erfolgt. "Keine Zwischenspeicherung" bedeutet, dass die empfangenen Daten nicht für längere Zeit (also im Bereich von vielen Minuten) in der Entität vorgehalten werden. Das kurze Zwischenspeichern von Daten, beispielsweise in einem Netzwerk-Switch bis zur Übertragung der paketierten Daten, ist damit nicht gemeint. "Keine Weiterverarbeitung" bedeutet, dass die Entität keine Bearbeitungen der Daten vornimmt, die über die für die Übertragung notwendigen Bearbeitungen hinausgeht. Das Paketieren oder Verschlüsseln der Daten ist damit nicht gemeint.

Nachfolgend werden nochmals einige Vorteile verschiedener Aspekte der Erfindung angegeben:
- Beliebige Zähler mit offengelegter Schnittstellenbeschreibung sind einsetzbar, was ein modulares und flexibles System ermöglicht.
- Geringere Kosten beim Roll-out
- Bestandsschutz für existierende Zählerinfrastruktur
- Die Zeitbasis des Systems muss nicht im Zähler abgebildet sein, sondern ist durch eine zentrale Zeitinstanz für viele (tausende) Zähler realisiert. Dadurch ergibt sich ein erheblicher Synergieeffekt.
- Einfache und zuverlässige Zeitsynchronisation
- Flexibilität bei der Tarifbildung sowohl auf Zählerebene als auch auf Tarifebene. Das System ermöglicht eine Vielzahl von Tarifen bis hin zu personalisierten Tarifen.
- Geringere Betriebskosten des Systems durch geringere Aufwände im Bereich der Wartung und Instandhaltung.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 11 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: ein vereinfachtes Blockschaltbild eines Systems zur Zeitreferenzierung von Messwerten eines Verbrauchszählers, wie es aus der Praxis bekannt ist,
- Fig. 2: ein vereinfachtes Blockschaltbild eines erfindungsgemäßen Systems zur Zeitreferenzierung von Messwerten und
- Fig. 3: ein Ablaufdiagramm zur Erläuterung der Verzögerungszeiten auf dem Kommunikationsweg.

Fig. 1 zeigt ein vereinfachtes Blockschaltbild eines Systems zur Zeitreferenzierung von Messwerten eines Verbrauchszählers gemäß Stand der Technik. Ein Smart Meter, der als Verbrauchszähler den Verbrauch elektrischer Energie misst, ist mit einem MUC (Multi Utility Communication)-Controller verbunden. Dem MUC-Controller ist eine Zeitinstanz zugeordnet, über die der MUC-Controller die aktuelle Uhrzeit erhält. Der MUC-Controller erhält neben einem Messwert des Smartmeters die aktuelle Uhrzeit von der Zeitinstanz und speichert diese zwischen. Alternativ kann der MUC-Controller den Messwert zusammen mit der Zeitreferenz direkt (also ohne Zwischenspeicherung) an einen Backend Server oder ein Backend Server System übertragen. Dort wird üblicherweise der empfangene Messwert samt Zeitreferenz für Anzeige- und/oder Abrechnungszwecke gespeichert. Nachteilig bei dem aus dem Stand der Technik bekannten Verfahren ist, dass jedem MUC-Controller eine separate Zeitinstanz zur Verfügung gestellt werden muss. Dies erzeugt zusätzliche Kosten und ein komplexes und kostenintensives System. Hinsichtlich weiterer Details wird auf die einleitenden Ausführungen zum Stand der Technik verwiesen.

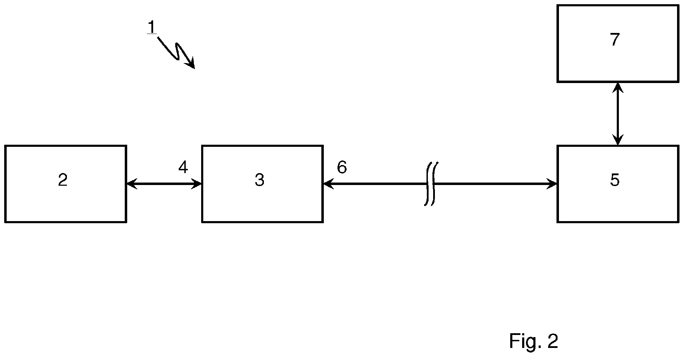

Fig. 2 zeigt ein vereinfachtes Blockschaltbild eines erfindungsgemäßen Systems 1. Das System 1 weist einen Verbrauchszähler 2 in Form eines Smart Meters auf, der den Verbrauch elektrischer Energie misst. Der Smart Meter ist mit einem Gateway 3 über eine Nahbereichsschnittstelle 4 verbunden. Das Gateway 3 ist wiederum mit einem Referenzierungsserver 5 über eine Weitbereichsschnittstelle 6 verbunden, wobei der Referenzierungsserver 5 entfernt von dem Gateway 3 angeordnet ist. Als Nahbereichsschnittstelle kommt eine unidirektionale Wireless M-Bus Schnittstelle zum Einsatz, über die der Verbrauchszähler in regelmäßigen Abständen Messwerte aussendet. Die Weitbereichsschnittstelle ist durch ein TCP/IP-Netzwerk gebildet.

Der Übersichtlichkeit wegen ist in Fig. 2 lediglich ein einzelner Verbrauchszähler 2 und ein einzelnes Gateway 3 dargestellt. Es ist jedoch eine Vielzahl von Verbrauchszählern 2 mit einem Referenzierungsserver 5 verbunden. Dabei können auch mehrere (oder alle) Verbrauchszähler 2 über ein gemeinsames Gateway 3 mit dem Referenzierungsserver 5 kommunizieren. Der Referenzierungsserver 5 ist mit einer Zeitinstanz 7 verbunden, über die der Referenzierungsserver 5 eine aktuelle Uhrzeit empfängt. Wenn der Referenzierungsserver 5 einen Messwert eines Verbrauchszählers 2 empfängt, bezieht der Referenzierungsserver 5 eine aktuelle Uhrzeit von der Zeitinstanz 7 und referenziert (unter Verwendung einer nicht eingezeichneten Referenzierungseinheit, die Bestandteil des Referenzierungsservers ist) den empfangenen Messwert mit der ausgelesenen Uhrzeit.

Die maximale Übertragungsdauer der Messwerte vom Smartmeter bis zum Referenzierungsserver wird abhängig vom gewählten Datenübertragungssystem einmalig festgelegt und wiederkehrend gemessen/überprüft.

Bei einigen Kommunikationssystemen ist die maximale Übertragungszeit systemimmanent. So breiten sich beispielsweise Funkwellen mit Lichtgeschwindigkeit aus. Das bedeutet, dass die Übertragungsdauer zwischen Sender und Empfänger, die sich in einigen Metern bis einigen Kilometern Abstand befinden, vernachlässigbar klein ist. Ebenso ist die maximale Übertragungsdauer bei Bussystemen in der Regel deterministisch und bekannt. Wichtig für das erfindungsgemäße Verfahren und das erfindungsgemäße System ist nicht, dass die Übertragungsdauer exakt bestimmt werden kann, sondern dass sichergestellt ist, dass die Übertragungsdauer einen bestimmten, in den Genauigkeitsanforderungen festgelegten Maximalwert nicht überschreitet. Sofern dies sichergestellt ist, kann der Messwert zum Zeitpunkt des Empfangs in dem Referenzierungsserver mit dem aktuellen Zeitstempel versehen werden. Die Zeitstempel liegen damit immer noch sehr nahe an dem tatsächlichen Zeitpunkt der Messung.

Auf dem Kommunikationsweg zwischen Zähler und Referenzierungsserver ergeben sich in dem dargestellten Ausführungsbeispiel die nachfolgend näher beleuchteten Verzögerungszeiten:
- Übertragung über die Nahbereichsschnittstelle:
   Die Übertragungsdauer über die Nahbereichsschnittstelle kann vernachlässigt werden. Bei einem Nahbereichsfunksystem erzeugt beispielsweise die Übertragung von Zähler zu Gateway eine Verzögerung von einigen wenigen Millisekunden. Andere Nahbereichsschnittstellen weisen ähnliche Übertragungszeiten auf. Wichtig ist nur, dass die maximale Übertragungszeit der Schnittstelle eindeutig bestimmbar ist.
- Prozesszeit im Gateway
   Die Prozesszeit im Gateway ist hauptsächlich durch die Dauer des Empfangs bestimmt. Bei einem Wireless M-Bus empfängt das Gateway die Daten mit einer Geschwindigkeit von 19,2 kBit/s. Bei einer Wireless M-Bus Paketgröße von 80 Byte ist die Empfangsdauer somit 33,3 ms. Die Daten werden nicht vorgehalten, da die empfangenen Messwerte direkt über die Weitbereichsschnittstelle an den Referenzierungsserver weitergeleitet werden.
- Übertragung über die Weitbereichsschnittstelle
   Die Übertragungszeit über die Weitbereichsschnittstelle ist ebenfalls sehr gering. Bei Übertragung eines Wireless M-Bus Paketes entsteht einschließlich TCP/IP-Overhead ein gesamtes Datenaufkommen von ca. 500 Byte. Selbst bei einer sehr geringen Übertragungsrate von 10 kBit/s ergibt sich lediglich eine Übertragungsdauer von 0,4 Sekunden. Sofern keine Paketverluste auftreten, ergibt sich somit eine sehr geringe Übertragungsdauer. Bei verbindungsorientierten Weitbereichsschnittstellen, wie zum Beispiel SDH (Synchronous Digital Hierarchy) oder ATM (Asynchronous Transfer Mode), ist die Übertragungsdauer systembedingt determiniert.
- Verarbeitungszeit in dem Referenzierungsserver
   Diese Zeit bis der Zeitstempel zum Wert gefügt ist, kann sehr gering gehalten werden. Die Daten werden sofort nach Eingang verarbeitet. Daher ist auch hier die Verzögerungszeit im Bereich weniger Millisekunden möglich. Sobald der Empfang nicht funktioniert (bspw. wenn eine Fehler bei der Zeit-Instanz oder der betreibenden Umgebung vorliegt) werden die Pakete vom Gateway aus verworfen, d.h. der Fall, dass Pakete über längere Zeit vorgehalten werden und dann plötzlich vom Server empfangen werden, ist ausgeschlossen.

Im Idealfall treffen die Daten also in einem Zeitbereich von Millisekunden bis maximal einer Sekunde bei dem Referenzierungsserver ein. Damit können die zuvor genannten Faktoren bei dem erfindungsgemäßen Verfahren und dem erfindungsgemäßen System vernachlässigt werden.

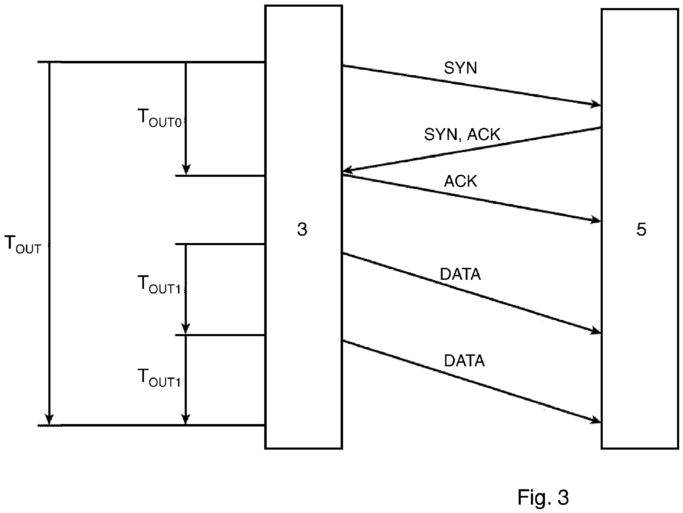

Allerdings können bei paketorientierten Übertragungsverfahren wie TCP/IP erhebliche Verzögerungen ergeben, die vom Idealfall deutlich abweichen. Hier sind insbesondere Timeouts und Sendewiederholungen auf der Weitbereichsschnittstelle zu nennen. Es ist in einem "Worst Case" Szenario denkbar, dass die Datenübertragung immer kurz vor dem Timeout erfolgt oder dass sie erst in der letzten Wiederholung kurz vor dem Timeout erfolgen. In Fig. 3 ist dies schematisch aufgezeichnet.

Fig. 3 zeigt ein Ablaufdiagramm einer Kommunikation zwischen Zähler (bzw. Gateway) und Referenzierungsserver bei einem System entsprechend Fig. 2. Wie zuvor ausgeführt wird die Übertragungszeit im Wesentlichen auf die Timeouts und die Sendewiederholungen reduziert. Zu Beginn einer Kommunikation zwischen Gateway und Referenzierungsserver erfolgt ein Handshake. Hierzu wird vom Gateway 3 ein SYN-Datenpaket an den Referenzierungsserver 5 gesendet. Als Antwort auf die Anfrage sendet der Referenzierungsserver 5 ein SYN,ACK-Datenpaket zurück. Dies wird seitens des Gateway 3 mit einem ACK-Datenpaket quittiert. Für das Handshake ist das Timeout auf T_{OUT0} gesetzt. Innerhalb dieser Zeit muss das Gateway 3 das SYN,ACK-Datenpaket empfangen.

In Fig. 3 wird nach dem Handshake angenommen, dass der Referenzierungsserver 5 auf zwei Übertragungsversuche von Messwerten (als DATA dargestellt) nicht mit einer positiven Quittierung innerhalb des Timeouts T_{OUT1} reagiert. Auf diese Weise ergibt sich ein Gesamt-Timeout T_{OUT} für die Kommunikation, die sich als Summe des Timeouts T_{OUT0} für das Handshake, die Summe der Timeouts für die Datenübertragung T_{OUT1} für alle möglichen Sendewiederholungen und einer eventuellen Wartezeit zwischen Senden des ACK-Datenpakets und Übertragen der Daten ergibt.

In einer bevorzugten Implementierung ist der Timeout für das Handshake auf 10 Sekunden festgelegt, bei der eigentlichen Datenübertragung auf 3 Sekunden, wobei maximal 3 Wiederholungen stattfinden dürfen. In Fig. 3 ist der dritte Übertragungsversuch nicht dargestellt. Die maximale Übertragungsdauer, bedingt durch die volle "Ausnutzung" der Timeout beträgt daher 16 Sekunden. In Kombination mit den oben genannten Verzögerungszeiten ergibt sich eine maximale Zeitdifferenz von ca. 17 Sekunden. Hinzu kann noch eine Wartezeit kommen, die zwischen Senden des ACK-Datenpakets und Übertragen der Daten liegen kann.

Das Einhalten dieser Verzögerungszeit kann durch Messung der tatsächlichen Übertragungsdauer über die Weitbereichsschnittstelle verifiziert werden. Bei einer paketorientierten bidirektionalen Verbindung wie TCP/IP kann in regelmäßigen Abständen die Übertragungszeit zwischen Gateway und Server durch das Übertragen eines Testpaketes von dem Referenzierungsserver zum Gateway und zurück gemessen werden. Auf diese Weise kann der Referenzierungsserver die Übertragungszeit eines Paketes in beide Richtungen bestimmen.

Die Erfindung ist bei allen Smart Metering Lösungen nutzbar, bei denen entweder die tatsächliche oder die maximale Übertragungsdauer der Daten von einem Zähler zu einem Server bestimmt werden kann. Dies kann z.B. eine TCP/IP oder UDP basierten Kommunikationsinfrastruktur sein, ebenso sind alle Funk und Bus-basierten System möglich, bei denen die maximale Übertragungszeit bekannt ist oder bestimmt werden kann und die Summe aus Übertragungszeit und Synchronisationsdifferenz des Servers kleiner ist als die maximal zulässige Synchronisationsdifferenz einer im Zähler eingesetzten Uhr ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: System
- 2: Verbrauchszähler
- 3: Gateway
- 4: Nahbereichsschnittstelle
- 5: Referenzierungsserver
- 6: Weitbereichsschnittstelle
- 7: Zeitinstanz

## Patentansprüche

1. Verfahren zur Zeitreferenzierung von Messwerten eines Verbrauchssählers, umfassend die Schritte:
Auslesen eines Messwerts aus einem Verbrauchszähler (2), wobei der Messwert den durch den Verbrauchszähler (2) gemessenen Verbrauch repräsentiert,
Übertragen des Messwerts über eine Weitbereichsschnittstelle (6) an einen Referenzierungsserver (5) auf einem Kommunikationsweg zwischen Verbrauchszähler (2) und Referenzierungsserver (5), wobei auf dem Kommunikationsweg ein Gateway (3) angeordnet ist, wobei durch das Gateway (3) eine Schnittstellenwandlung zwischen einer Nahbereichsschnittstelle (4) und der Weitbereichsschnittstelle (6) durchführt wird,
Empfangen des Messwerts durch den Referenzierungsserver (5) und
Referenzieren der von dem Referenzierungsserver (5) empfangenen Messwerte mit einer Uhrzeit durch eine Referenzierungseinheit, wobei der Referenzierungseinheit die Uhrzeit durch eine Zeitinstanz bereitgestellt wird,
wobei in Netzwerkknoten auf dem Kommunikationsweg Timeouts und/oder die Anzahl von Sendewiederholungen derart festgelegt werden, dass auf dem Kommunikationsweg das Einhalten einer maximalen Übertragungszeit erreicht wird.

2. Verfahren nach Anspruch 1, **dadurch gekennzeichnet, dass** zum Einhalten einer maximalen Übertragungszeit für das Übertragen eines Messwertes auf dem Kommunikationsweg die Anzahl der Netzwerkknoten, die an dem Kommunikationsweg beteiligt sind, beschränkt wird.

3. Verfahren nach Anspruch 1 oder 2, **dadurch gekennzeichnet, dass** eine maximale Übertragungszeit auf dem Kommunikationsweg durch Quality-of-Service-Mechanismen eingestellt wird.

4. Verfahren nach einem der Ansprüche 1 bis 3, **dadurch gekennzeichnet, dass** die maximale Übertragungszeit kleiner oder gleich 60 Sekunden, bevorzugter Weise kleiner oder gleich 30 Sekunden, besonders bevorzugter Weise kleiner oder gleich 20 Sekunden festgelegt wird.

5. Verfahren nach einem der Ansprüche 1 bis 4, **dadurch gekennzeichnet, dass** das Einhalten der maximalen Übertragungszeit durch Senden einer Anfrage durch den Referenzierungsserver (5) an einen Verbrauchszähler (2) und durch Auswerten der Zeit zwischen Senden der Anfrage und Empfang einer Antwort von dem angefragten Verbrauchszähler (2) überprüft wird.

6. Verfahren nach einem der Ansprüche 1 bis 5, **dadurch gekennzeichnet, dass** die Übertragung von Messwerten von einem Verbrauchszähler (2) zu dem Referenzierungsserver (5) abgebrochen werden, wenn die Anzahl von Sendewiederholungen bei Netzwerkknoten auf der Kommunikationsweg oder die Anzahl der auf dem Kommunikationsweg beteiligen Netzwerkknoten überschritten ist.

7. Verfahren nach einem der Ansprüche 1 bis 6, **dadurch gekennzeichnet, dass** zum Referenzieren eines empfangenen Messwertes zu dem empfangenen Messwert die Uhrzeit, zu der der Messwert durch den Referenzierungsserver (5) empfangen wurde, gespeichert wird oder
eine Signatur zu dem empfangenen Messwert gebildet wird, die von der Uhrzeit des Empfangs des Messwertes durch den Referenzierungsserver (5) abhängt, und Messwert und Signatur gemeinsam gespeichert werden.

8. Verfahren nach einem der Ansprüche 1 bis 7, **dadurch gekennzeichnet, dass** die Zeitinstanz (7) mit einem Zeitsignal, vorzugweise einem durch einen Zeitserver bereitgestellten Zeitsignal synchronisiert wird.

9. Verfahren nach einem der Ansprüche 1 bis 8, **dadurch gekennzeichnet, dass** Messwerte eines Verbrauchszählers (2) periodisch an den Referenzierungsserver (5) übertragen werden und/oder dass Messwerte eines Verbrauchszählers (2) periodisch durch den Referenzierungsserver (5) von dem Verbrauchszähler (2) abgefragt werden.

10. System zur Zeitreferenzierung von Messwerten von Verbrauchszählern, insbesondere zur Durchführung eines Verfahrens nach einem der Ansprüche 1 bis 9, umfassend
mehrere Verbrauchszähler (2), wobei jeder Verbrauchszähler (2) jeweils einen Messwert bestimmt, der einen durch den Verbrauchszähler (2) gemessenen Verbrauch repräsentiert,
einen Referenzierungsserver (5), der über eine Weitbereichsschnittstelle (6) kommunizierend mit den Verbrauchszählern (2) verbunden ist und zum Empfangen von Messwerten von den Verbrauchszählern (2) auf einem Kommunikationsweg zwischen Verbrauchszähler (2) und Referenzierungsserver (5) ausgestaltet ist, wobei auf dem Kommunikationsweg ein Gateway (3) angeordnet ist, das eine Schnittstellenwandlung zwischen einer Nahbereichsschnittstelle (4) und einer Weitbereichsschnittstelle (6) durchführt,
eine Zeitinstanz (7) zum Bereitstellen einer Uhrzeit und
eine Referenzierungseinheit, die zum Referenzieren eines durch den Referenzierungsserver (5) empfangenen Messwerts mit einer von der Zeitinstanz (7) bereitgestellten Uhrzeit ausgebildet ist,
wobei in Netzwerkknoten auf dem Kommunikationsweg Timeouts und/oder die Anzahl von Sendewiederholungen derart festlegbar sind, dass auf dem Kommunikationsweg das Einhalten einer maximalen Übertragungszeit erreicht wird.

11. System nach Anspruch 10, **dadurch gekennzeichnet, dass** der Verbrauchszähler (2) den Verbrauch von elektrischer Energie, Wasser, Gas oder Wärme misst.

12. System nach Anspruch 10 oder 11, **dadurch gekennzeichnet, dass** der Referenzierungsserver (5) an einem zentralen Punkt innerhalb eines Energieversorgungsnetzwerkes angeordnet ist, wobei der zentrale Punkt vorzugsweise durch ein Rechenzentrum eines Energieversorgers, eine Transformatorstation oder einen gemeinsamen Anschlusspunkt für eine Vielzahl von Verbrauchern gebildet ist.

13. System nach einem der Ansprüche 10 bis 2, **dadurch gekennzeichnet, dass** die Referenzierungseinheit als Bestandteil der Referenzierungsservers (5) ausgebildet ist.

## Claims

1. Method for time-referencing measured values of a consumption meter, comprising the following steps:
reading a measured value from a consumption meter (2), wherein the measured value represents the consumption measured by the consumption meter (2),
transmitting the measured value via a long-range interface (6) to a referencing server (5) on a communications path between the consumption meter (2) and the referencing server (5), wherein a gateway (3) is arranged on the communications path, wherein the gateway (3) changes the interface between a close-range interface (4) and the long-range interface (6),
receiving the measured value by means of the referencing server (5) and
time-referencing the measured values received by the referencing server (5) by means of a referencing unit, wherein the referencing unit is provided with the time by a time entity,
wherein timeouts and/or the number of retransmissions are determined in network nodes on the communications path such that it is possible to comply with a maximum transmission time on the communications path.

2. Method according to claim 1, **characterised in that**, in order to comply with a maximum transmission time for transmitting a measured value on the communications path, the number of network nodes involved in the communications path is limited.

3. Method according to either claim 1 or claim 2, **characterised in that** a maximum transmission time on the communications path is set by quality-of-service mechanisms.

4. Method according to any of claims 1 to 3, **characterised in that** the maximum transmission time is less than or equal to 60 seconds, preferably less than or equal to 30 seconds, particularly preferably less than or equal to 20 seconds.

5. Method according to any of claims 1 to 4, **characterised in that** compliance with the maximum transmission time is verified by sending a request by means of the referencing server (5) to a consumption meter (2) and by analysing the time between sending the request and receiving a response from the requested consumption meter (2).

6. Method according to any of claims 1 to 5, **characterised in that** the transmission of measured values from a consumption meter (2) to the referencing server (5) is stopped when the number of retransmissions for network nodes on the communications path or the number of network nodes involved in the communications path is exceeded.

7. Method according to any of claims 1 to 6, **characterised in that**, in order to reference a received measured value, in addition to the received measured value the time at which the measured value was received by the referencing server (5) is stored or
in addition to the received measured value a signature is formed, which is dependent on the time at which the measured value is received by the referencing server (5), and the measured value and the signature are stored together.

8. Method according to any of claims 1 to 7, **characterised in that** the time entity (7) is synchronised with a time signal, preferably a time signal provided by a time server.

9. Method according to any of claims 1 to 8, **characterised in that** measured values of a consumption meter (2) are periodically transmitted to the referencing server (5) and/or **in that** measured values of a consumption meter (2) are periodically requested from the consumption meter (2) by the referencing server (5).

10. System for time-referencing measured values of consumption meters, in particular for carrying out a method according to any of claims 1 to 9, comprising
a plurality of consumption meters (2), wherein each consumption meter (2) specifies a measured value in each case, which value represents consumption measured by the consumption meter (2),
a referencing server (5), which is connected to the consumption meters (2) by means of a long-range interface (6) such that they communicate and is configured to receive measured values from the consumption meters (2) on a communications path between the consumption meter (2) and the referencing server (5), wherein a gateway (3) is arranged on the communications path and changes the interface between a close-range interface (4) and a long-range interface (6),
a time entity (7) for providing a time and
a referencing unit, which is designed to reference a measured value received by the referencing server (5) using a time provided by the time entity (7),
wherein timeouts and/or the number of retransmissions are determined in network nodes on the communications path such that it is possible to comply with a maximum transfer time on the communications path.

11. System according to claim 10, **characterised in that** the consumption meter (2) measures the consumption of electrical energy, water, gas or heat.

12. System according to either claim 10 or claim 11, **characterised in that** the referencing server (5) is arranged at a central point within an energy supply network, the central point preferably being formed by a data centre of an energy supplier, a transformer station or a common connection point for a plurality of consumers.

13. System according to any of claims 10 to 12, **characterised in that** the referencing unit is designed as a component of the referencing server (5).

## Revendications

1. Procédé de référencement temporel de valeurs de mesure d'un compteur de consommation, comprenant les étapes suivantes :
lecture d'une valeur de mesure à partir d'un compteur de consommation (2), la valeur de mesure représentant la consommation mesurée par le compteur de consommation (2),
transmission de la valeur de mesure par le biais d'une interface de zone lointaine (6) à un serveur de référencement (5) sur une voie de communication entre le compteur de consommation (2) et le serveur de référencement (5), une passerelle (3) étant disposée sur le voie de communication, une conversion d'interface étant effectuée par la passerelle (3) entre une interface de zone proche (4) et l'interface de zone lointaine (6),
réception d'une valeur de mesure par le serveur de référencement (5) et
référencement des valeurs de mesure reçues par le serveur de référencement (5) avec une heure par une unité de référencement, l'heure étant fournie à l'unité de référencement par une instance temporelle,
des time-outs et/ou le nombre de répétitions d'émission étant stipulés dans des noeuds de réseau sur la voie de communication de telle sorte que le respect d'un temps de transmission maximal sur la voie de communication est obtenu.

2. Procédé selon la revendication 1, **caractérisé en ce que**, pour le respect d'un temps de transmission maximal pour la transmission d'une valeur de mesure sur la voie de communication, le nombre de noeuds de réseau qui sont impliqués sur la voie de communication est limité.

3. Procédé selon la revendication 1 ou 2, **caractérisé en ce qu'**un temps de transmission maximal sur la voie de communication est réglé par des mécanismes de quality-of-service.

4. Procédé selon l'une des revendications 1 à 3, **caractérisé en ce que** le temps de transmission maximal est stipulé comme étant inférieur ou égal à 60 secondes, de façon préférée inférieur ou égal à 30 secondes, de façon particulièrement préférée inférieur ou égal 20 secondes.

5. Procédé selon l'une des revendications 1 à 4, **caractérisé en ce que** le respect du temps de transmission maximal est vérifié par l'envoi d'une interrogation par le serveur de référencement (5) à un compteur de consommation (2) et par l'analyse du temps entre l'envoi de l'interrogation et la réception d'une réponse de la part du compteur de consommation (2) interrogé.

6. Procédé selon l'une des revendications 1 à 5, **caractérisé en ce que** la transmission de valeurs de mesure à partir d'un compteur de consommation (2) vers le serveur de référencement (5) est interrompue quand le nombre de répétitions d'émission au niveau des noeuds de réseau sur la voie de communication ou le nombre de noeuds de réseau impliqués sur la voie de communication est dépassé.

7. Procédé selon l'une des revendications 1 à 6, **caractérisé en ce que**, pour le référencement d'une valeur de mesure reçue pour la valeur de mesure reçue, l'heure à laquelle la valeur de mesure a été reçue par le serveur de référencement (5) est enregistrée, ou
une signature pour la valeur de mesure reçue est formée, qui dépend de l'heure de la réception de la valeur de mesure par le serveur de référencement (5), et la valeur de mesure et la signature sont enregistrées conjointement.

8. Procédé selon l'une des revendications 1 à 7, **caractérisé en ce que** l'instance temporelle (7) est synchronisée avec un signal de temps, de préférence avec un signal de temps fourni par un serveur de temps.

9. Procédé selon l'une des revendications 1 à 8, **caractérisé en ce que** des valeurs de mesure d'un compteur de consommation (2) sont transmises périodiquement au serveur de référencement (5) et/ou **en ce que** des valeurs de mesure d'un compteur de consommation (2) sont interrogées périodiquement par le serveur de référencement (5) à partir du compteur de consommation (2).

10. Système de référencement temporel de valeurs de mesure de compteurs de consommation, en particulier pour la réalisation d'un procédé selon l'une des revendications 1 à 9, comprenant
plusieurs compteurs de consommation (2), chaque compteur de consommation (2) définissant respectivement une valeur de mesure qui représente une consommation mesurée par le compteur de consommation (2),
un serveur de référencement (5) qui est raccordé en communication aux compteurs de consommation (2) par le biais d'une interface de zone lointaine (6) et qui est configuré pour la réception de valeurs de mesure en provenance des compteurs de consommation (2) sur une voie de communication entre le compteur de consommation (2) et le serveur de référencement (5), une passerelle (3) étant disposée sur la voie de communication, qui réalise une conversion d'interface entre une interface de zone proche (4) et une interface de zone lointaine (6),
une instance temporelle (7) pour la fourniture d'une heure, et
une unité de référencement qui, pour le référencement d'une valeur de mesure reçue par le serveur de référencement (5), est constituée avec une heure fournie par l'instance temporelle (7),
des time-outs et/ou le nombre de répétitions d'émission pouvant être stipulés dans des noeuds de réseau sur la voie de communication de telle sorte que le respect d'un temps de transmission maximal sur la voie de communication est obtenu.

11. Système selon la revendication 10, **caractérisé en ce que** le compteur de consommation (2) mesure la consommation d'énergie électrique, d'eau, de gaz ou de chaleur.

12. Système selon la revendication 10 ou 11, **caractérisé en ce que** le serveur de référencement (5) est disposé en un point central à l'intérieur d'un réseau d'alimentation en énergie, le point central étant de préférence formé par un centre de calcul d'un fournisseur d'énergie, d'un poste de transformateur ou par un point de raccordement commun pour une multiplicité de consommateurs.

13. Système selon l'une des revendications 10 à 12, **caractérisé en ce que** l'unité de référencement est constituée en tant que composant du serveur de référencement (5).
